# EUROPEAN PATENT SPECIFICATION

(11) **EP 2 185 960 B1**
(45) Date of publication and mention of the grant of the patent: **08.11.2017**
(21) Application number: 07803267.9
(22) Date of filing: 05.09.2007
(51) Int. Cl.: G02B 6/44

(54) **OPTICAL CABLE TRANSITION BOX ASSEMBLY**
VERTEILERMUFFE FÜR OPTISCHE KABEL
BOÎTIER DE TRANSITION POUR CABLES OPTIQUES

(43) Date of publication of application: 19.05.2010
(73) Proprietor: Prysmian Cables & Systems Limited, Eastleigh Hampshire SO50 6YU (GB)
(72) Inventor: GRIFFITHS, Ian, Eastleigh Hampshire SO50 6YU (GB); LE DISSEZ, Arnaud, Eastleigh Hampshire SO50 6YU (GB)
(74) Representative: Colombo, Stefano Paolo
(86) International application number: PCT/EP2007/059307
(87) International publication number: WO 2009/030277

(56) References cited:
- EP-A- 0 626 603
- EP-A- 0 744 640
- EP-A- 1 054 279
- EP-A- 1 241 765
- EP-A- 1 333 303
- DE-A1- 4 029 857
- JP-A- 2001 116 968
- US-A- 5 886 300
- US-A1- 2005 271 344
- US-A1- 2006 254 817

## Description

### Technical field

The present invention relates to the field of optical communication apparatuses. In particular, the present invention relates to an optical transition box assembly for making an optical connection between at least one in-line optical cable and a drop cable in a FTTH ("Fiber To The Home") network. Furthermore, the present invention relates to a method for installing an optical transition box assembly.

### Background art

A FTTH network is an optical communication network providing a number of end users with broadband communication services, i.e. with services requiring data transmission at a rate of some hundreds of Mbit/s or more.

Typically, a FTTH network comprises a distribution cabinet cooperating with a transport network, a plurality of termination boxes and a plurality of optical fibers. Each termination box is connected to the distribution cabinet by means of one or more (typically two) optical fibers. In the following description, for mere simplicity, it is assumed that a termination box is connected to the distribution cabinet by means of a single optical fiber.

Typically, a distribution cabinet is located in the basement of a building, in which building the end users reside, whereas termination boxes are arranged at the various building floors, within or in proximity of the apartments and/or offices of the end users.

An optical cable comprising a plurality of optical fibers typically exits the distribution cabinet. In the following of the present description, an optical cable which exits a distribution cabinet and serves each floor of a given building to reach each end user will be indicated as "in-line optical cable" or "riser cable". Further, in the following of the present description, each optical fiber of an in-line optical cable will be indicated as "in-line optical fiber".

Typically, the in-line optical cable vertically runs through the building from the basement up to all the building floors. The in-line optical cable is typically laid down within a duct, which is substantially vertically fixed to a building wall and which mechanically protects the in-line optical cable.

In the following of the present description, the duct which receives an in-line optical cable will be indicated as "in-line cable duct".

Typically, an optical cable, which comprises one or more optical fibers, exits each termination box installed at an end user's apartment/office of the building. In the following of the present description, an optical cable which exits a termination box will be indicated as "drop cable". Further, in the following of the present description, each optical fiber of a drop cable will be indicated as "drop optical fiber".

Connecting the distribution cabinet to a termination box requires extracting at least one in-line optical fiber from the in-line optical cable and connecting such an in-line optical fiber to a drop optical fiber of said drop cable exiting the termination box. The optical connection between the in-line optical cable and the drop cable is typically made in a so-called "optical transition box".

An optical transition box typically comprises a base and a cover. The base has a bottom and, typically, four sidewalls. Two opposite sidewalls have respective recesses for housing an in-line cable duct so that a portion of the in-line cable duct is contained in the optical transition box.

One of the sidewalls (which may be either one of the two sidewalls having the above recesses or another one) has a number of holes (usually up to 12 holes) which are shaped for allowing the free end of a respective drop cable to be inserted into the optical transition box.

Typically, the base of the optical transition box is provided with a plurality of tracks for properly arranging the optical fibers therein. Generally, each track is provided with straight portions and curved portions, each curved portion having a bending radius of at least 20 mm in order to minimize the bending losses of the arranged optical fibers.

The base of the optical transition box is also provided with an area suitable for housing the joints (i.e. fusion splices and/or mechanical joints) between the optical fibers.

As said above, an optical transition box is typically associated to the in-line cable duct so that a portion of the in-line cable duct is housed within the box.

In particular, the bottom of the optical transition box base is typically fixed to a wall of the building so that the recesses of the two opposite sidewalls are substantially vertically aligned. Then, the in-line cable duct is usually vertically oriented and inserted in the recesses so that a portion thereof is contained within the box. The portions of the in-line cable duct entering and exiting the box are fixed to the building wall as well. A window is made in the portion of the in-line cable duct which is contained in the optical transition box so that the in-line cable is advantageously exposed and the outer sheath thereof can be peeled off for accessing the in-line optical fibers. For instance, in the case the in-line optical cable is a microbundle optical cable, a length of few meters of a microbundle can be extracted from the in-line optical cable and the outer sheath of the microbundle is removed for some tens of centimeters for exposing the in-line optical fibers of the microbundle.

The free end of each drop cable connected to a respective termination box is inserted in a respective hole of a sidewall of the optical transition box base so that a portion of the drop cable is received in the box and the outer sheath of the drop cable can be peeled off for some tens of centimeters (starting from the free end thereof) for allowing the respective drop optical fiber(s) to be exposed.

At least one in-line optical fiber is connected to a respective drop optical fiber by means of fusion splicing or a mechanical joint.

The in-line optical fibers and drop optical fibers are arranged in the tracks provided in the box base and the splices/mechanical joints are arranged in the dedicated area of the box base.

Finally, the cover is positioned onto the box base so that the optical transition box results to be safely closed.

US 6 415 092 discloses an access box for one or more optic fibers in a tensioned cable having a structural section that integrates the passing cable and has a central connection system area demarcated by two connection bases to which there are connected a plurality of cleaved optic fibers. The connection system area has a plurality of mini-cables providing for the shuffling of the cleaved optic fibers and/or a plurality of branching cables providing for the branch connection of the cleaved optic fibers.

EP 1 054 279 describes an optic fibre access box having a cable with fibre optic sections and a central connection zone, which has a number of mini cables that can be used to form loops or provide extra cabling when a replacement path is needed for broken fibre optic sections.

EP 0 744 640 describes a connection box for optical fibres whose body comprises two hinged parts which are closed by clips shared between the two halves. The cables enter through openings in the body and are anchored by collars, support elements and reinforced tubular structures. The branch fibres are anchored by a flat piece of foam under which the spliced branches are placed. These are alongside the path for the cable passing through the connector. The cables may alternatively be wound around storage drums and wound off so that the spliced junctions meet in grooves between strips in a fixing element.

### Summary of the invention

The Applicant has noticed that the above optical transition boxes have some problems.

In particular, the Applicant has noticed that optical transition boxes can be associated only to in-line cable ducts which have a cross section matching with the size and the shape of the recesses provided at the sidewalls of the box base. Therefore, a plurality of optical transition boxes having recesses with different shapes and sizes are required in order to suitably fit in-line cable ducts of different cross sections (in terms of shape and/or size thereof) to said optical transition boxes.

Moreover, optical transition boxes designed to engage in-line cable ducts have the overall dimensions remarkably high. In particular, the Applicant has noticed that such optical transition boxes considerably protrude from the building wall (much more than the in-line cable ducts to which they are associated), thereby negatively affecting the cable installation from an aesthetical point of view.

The Applicant has tackled the problem of providing an optical transition box which overcomes the drawbacks mentioned above.

In particular, the Applicant has tackled the problem of providing an optical transition box which can be advantageously associated to in-line cable ducts having cross sections of different shape and size.

The Applicant has perceived that this problem can be solved by providing an optical transition box which is suitable for being positioned adjacent to an in-line cable duct. The Applicant has perceived that, by avoiding the optical transition box to be positioned directly onto the in-line cable duct so that a portion thereof results to be contained within the optical transition box, the optical transition box design and dimensions are no more negatively affected by the in-line cable ducts shape and dimensions.

Within the present invention the Applicant has found that the overall dimensions of the optical transition box can be advantageously reduced by having the in-line cable only entering the optical transition box, instead of the whole in-line cable duct. Preferably, the in-line cable enters and exits the optical transition box from opposite sidewalls thereof.

In order to provide an optical transition box which is suitable for being positioned adjacent to an in-line cable duct, the Applicant has faced the problem of properly managing the optical connection(s) between the optical fiber(s) of the in-line optical cable and the optical fiber(s) of the drop cable, while taking into consideration also the aesthetical issues which are requested to be satisfied by the optical transition box for its installation inside a house or the like.

The Applicant has found that the optical fiber(s) of an in-line optical cable can be extracted therefrom, lead within the optical transition box and spliced to the optical fiber(s) of a drop cable by providing at least one cable protection cover which allows to reduce the optical transition box overall dimensions and to advantageously protect any cable portions entering and exiting the optical transition box.

According to a first aspect, the present invention provides an optical transition box assembly comprising an optical transition box, the optical transition box comprising a base and a cover, wherein the base comprises two sidewalls, each of the two sidewalls having a first opening allowing a portion of an in- line optical cable, extracted from an in-line cable duct positioned next to the base and arranged so that the in-line cable exits and enters the duct through at least one window provided in the duct, to enter the base and to exit the base, the optical transition box assembly further comprising a cable protection cover removably engageable with the base and, when engaged with the base, suitable to cover a length of the portion of the in-line cable, said length being exposed between the at least one window of the duct and the first opening of one of the two sidewalls.

Preferably, at least one of the two sidewalls has a first weakening line defining a first removable sidewall portion, the first weakening line creating the first opening when the first removable portion is removed.

Profitably, the first weakening line is U-shaped.

Preferably, the base has in-line cable fixing tabs for fixing the in-line optical cable.

According to preferred embodiments, said one of the two sidewalls further has a second opening allowing a drop optical cable to enter the base.

Preferably, the cable protection cover is suitable to cover also the second opening.

Preferably, said one of the two sidewalls has a second weakening line defining a second removable sidewall portion, the second weakening line creating the second opening, when the second removable portion is removed.

Preferably, the second weakening line is U-shaped.

Profitably, the base has drop cable fixing tabs for fixing the drop cable.

According to preferred embodiments, the base further comprises a plurality of guiding elements configured to define optical fibers paths for arranging optical fibers extracted from the in-line cable and/or the drop cable.

Preferably, said one of the two sidewalls is provided with a fixing device for fixing the cable protection cover to the base.

Further, preferably, the cable protection cover has fixing protrusions suitable for engaging with the fixing device.

Preferably, the cable protection cover has a front protection surface substantially shaped as a right-angled triangle.

Profitably, the cable protection cover further has a side protection surface connected to the front protection surface along an hypotenuse of the right-angled triangle.

According to preferred embodiments, the base is made from a thermoplastic material. Preferably, the base is made from an acrylonitrile butadiene styrene polymer.

According to preferred embodiments, the optical transition box further comprises a splice tray.

Preferably, the splice tray is connectable to the base and is rotatable between a first position, wherein the splice tray substantially covers the base, and a second position, wherein the splice tray allows accessing the base.

Preferably, the splice tray has at least one fiber guiding channel.

Profitably, the splice tray is made from a thermoplastic material. Preferably, the splice tray is made from an acrylonitrile butadiene styrene polymer.

According to a second aspect, the present invention provides a method for installing an optical transition box assembly for making an optical connection between an in-line optical cable and a drop optical cable of a fiber-to-the-home network, the optical transition box assembly comprising an optical transition box, the in-line optical cable being laid down in a duct, wherein the method comprises: a) providing the duct with at least one window; b) extracting a portion of the in-line cable from the duct and arranging the portion so that the in-line cable exits and enters the duct through the at least one window; c) positioning the optical transition box next to the duct; d) introducing the portion of the in-line cable in the optical transition box; e) introducing an end of the drop optical cable in the optical transition box; and f) making an optical connection between at least one optical fiber of the in-line optical cable and at least one optical fiber of the drop optical cable within the optical transition box, wherein the method further comprises the step of covering by means of a cable protection cover a length of the portion of the in-line cable, the length being exposed between the at least one window and the optical transition box.

Preferably, the duct is provided with two windows. In this case, profitably, the optical transition box is positioned between the two windows.

Preferably, the length is exposed between one of the two windows and the optical transition box.

Preferably, the step of covering further comprises the step of covering a portion of the drop optical cable, the portion being exposed between the at least one window and the optical transition box.

Preferably, the portion of the drop optical cable is preferably exposed between one of the two windows and the optical transition box.

Profitably, the step of covering is carried out after the step f) of making an optical connection.

### Brief description of the drawings

The present invention will become fully clear by reading the following detailed description, given by way of example and not of limitation, to be read by referring to the accompanying drawings, wherein:
- Figure 1 is a perspective view of an optical transition box assembly in the closed configuration according to an embodiment of the present invention;
- Figure 2 is a perspective view of the base and the splice tray of the optical transition box of Figure 1 in the open configuration;
- Figure 3 is a top plane view of the base of Figure 2;
- Figure 4 is a top view of the base of Figure 2 when partially superimposed by the splice tray;
- Figures 5a and 5b are perspective views of a cable protection cover of the optical transition box assembly of Figure 1;
- Figure 6 is a perspective view of an in-line cable duct configured to be associated to the optical transition box assembly of Figure 1; and
- Figure 7 is a perspective view of the in-line cable duct of Figure 6 when associated to the optical transition box assembly of Figure 1 and further showing the optical connection between an in-line cable and a drop cable.

### Detailed description of preferred embodiments of the invention

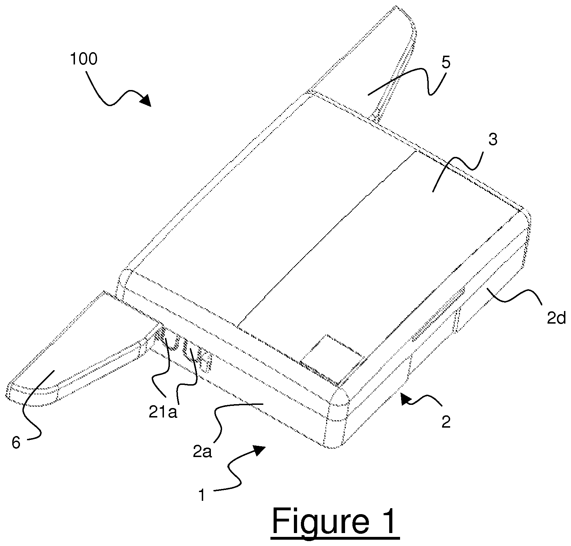

By referring to Figures 1 to 5a-5b, an optical transition box assembly 100 according to an embodiment of the present invention will be described in detail. Figures 1 to 5a-5b are not in scale.

The optical transition box assembly 100 comprises an optical transition box 1 and two cable protection covers 5, 6. The optical transition box 1 comprises a base 2, a cover 3 and a splice tray 4.

The base 2 comprises a bottom 2e and four sidewalls 2a, 2b, 2c, 2d. Preferably, the bottom 2e is substantially rectangular. Preferably, the sidewalls 2a, 2b, 2c, 2d are substantially perpendicular to the bottom 2e.

Typically, the base length is comprised from about 200 mm to 150 mm, more preferably from about 150 mm to 120 mm.

Typically, the base width is comprised from about 120 mm to 150 mm, more preferably from about 100 mm to 120 mm.

Typically, the base thickness is comprised from about 50 mm to 10 mm, more preferably from about 30 mm to 20 mm.

Preferably, each of the sidewalls 2a, 2c has a first weakening line 201a, 201c, respectively, defining a first removable portion 20a, 20c of the sidewalls 2a, 2c, respectively. Preferably, the first weakening lines 201a, 201c are placed in corresponding opposed positions, i.e. substantially at a same distance from the sidewall 2b. Preferably, each first weakening line 201a, 201c is such that, when the corresponding first removable portion 20a, 20c is removed (e.g. by pressing it with a finger tip or a tool), a first opening is created which is suitable for housing an in-line cable. Preferably, the first weakening lines 201a, 201c are U-shaped.

Preferably, the sidewall 2a has second weakening lines 211a, each defining second removable portions 21a of the sidewall 2a. Although in the Figures two second weakening lines 211a are shown, this is merely exemplary since the sidewall 2a may have a different number of second weakening lines 211a. Preferably, each second weakening line 211a is such that, when a corresponding second removable portion 21a is removed (e.g. by pressing it with a finger tip or a tool), a second opening is created which is suitable for housing a drop cable. Preferably, the second weakening lines 211a are U-shaped. Preferably, also the sidewall 2c has second weakening lines 211c which provide for corresponding removable portions 21c. Since these second weakening lines 211c are substantially equal to the second weakening lines 211a of the sidewall 2a, a detailed description thereof will not be repeated.

Preferably, next to the first weakening lines 201a, 201c of respective sidewalls 2a, 2c, the bottom 2e has in-line cable fixing tabs 22a, 22c. Preferably, next to each second weakening line 211a of the sidewall 2a, the bottom 2e has drop cable fixing tabs 23a. Preferably, next to each second weakening line 211c of the sidewall 2c, the bottom 2e has drop cable fixing tabs 23c. Preferably, the in-line cable fixing tabs 22a, 22c and the drop cable fixing tabs 23a, 23c are V-shaped and are made of a flexible material.

The bottom 2e is provided with a plurality of guiding elements 24, 25, 251 whose shape and arrangement define optical fibers paths according to which the optical fibers extracted from the in-line cable and the drop cable(s) may be arranged within the base 2, as it will be described in detail herein after.

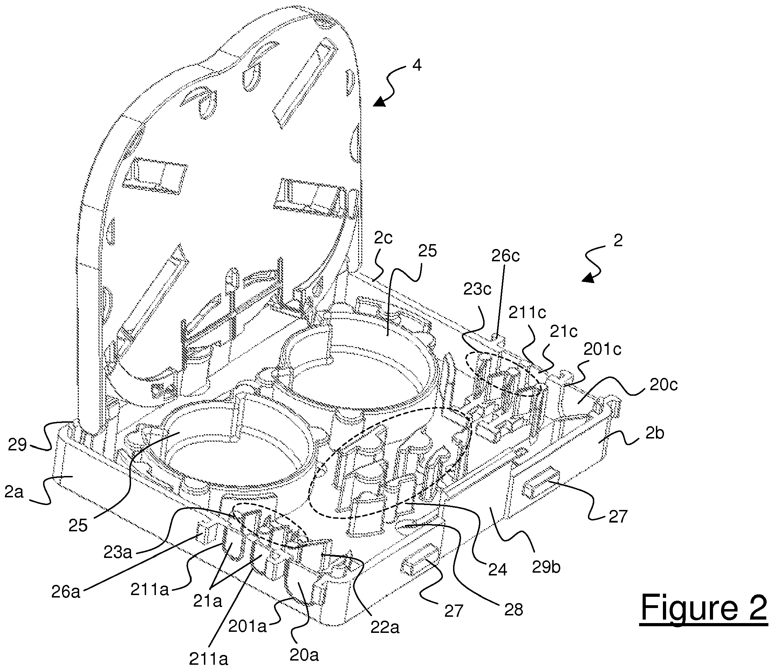

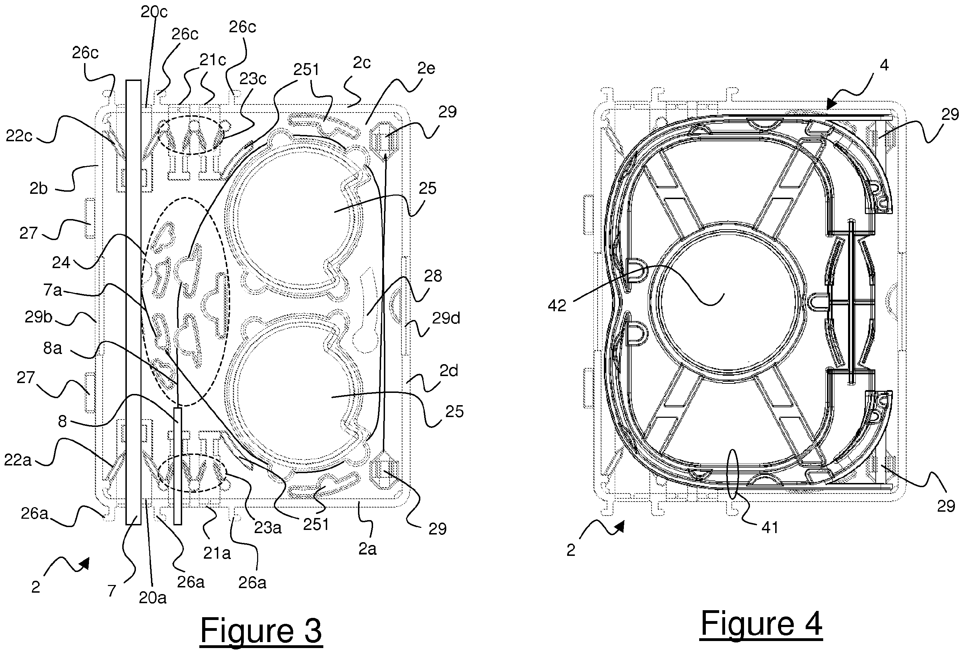

In particular, in a region between the drop cable fixing tabs 23a and the drop cable fixing tabs 23c, the bottom 2e has a plurality of first fiber guiding protrusions 24 (enclosed by a dashed line in Figures 2 and 3) extending substantially perpendicularly to the bottom 2e. Each of the first fiber guiding protrusions 24 has a curved cross section with a bending radius which is preferably higher than or equal to 20 mm. The bottom 2e has also two fiber winding protrusions 25 which are generally indicated as "mandrels". Such a configuration is merely exemplary since the bottom 2e can have any number of fiber winding protrusions 25. Each fiber winding protrusions 25 has a lateral surface which is substantially cylindrical at least in a portion of its perimeter. Preferably, each fiber winding protrusion 25 has a diameter equal to or higher than 40 mm. Preferably, the bottom 2e has second fiber guiding protrusions 251 arranged around each of the fiber winding protrusions 25 and extending substantially perpendicularly to the bottom 2e. Each of the second fiber guiding protrusions 251 has a curved cross section such that each of the second fiber guiding protrusions 251 is substantially parallel to a portion of the lateral surface of one of the fiber winding protrusions 25.

Preferably, the sidewalls 2a, 2c are provided with fixing devices 26a, 26c for fixing the two cable protection covers 6, 5, respectively, to the base 2, as it will be described in further detail herein after. According to the embodiment shown in the Figures, each of the fixing devices 26a, 26c comprises three hooking elements projecting from the base 2.

Preferably, the sidewall 2b has two spacers 27 projecting from the base 2, whose function will be explained in detail herein after.

Preferably, the bottom 2e has fixing holes 28 which are suitable for fixing the bottom 2e to a wall of a building by means of screws, bolts or the like.

The bottom 2e is further preferably provided with at least one hinge 29 (two hinges are shown in the Figures) for connecting the splice tray 4 to the base 2, as it will be described in detail herein after.

Preferably, the sidewalls 2b and 2d of the base 2 have cover locking tabs 29b and 29d, respectively, for allowing the cover 3 to be locked to the base 2.

Preferably, the base 2 is made of a thermoplastic material. More preferably, the base is made from ABS (Acrylonitrile butadiene styrene) polymers. In case a thermoplastic material is used, the in-line fixing tabs 22a, 22c, the drop fixing tabs 23a, 23c, the guiding elements 24, 25, 251, the fixing devices 26a, 26b, the spacers 27, the hinges 29 and the cover locking tabs 29b, 29d can be integral with the base 2.

As mentioned above, the splice tray 4 is connected to the base 2 by means of hinges 29. In particular, the splice tray 4 is rotatable about the hinges 29 between a first position (which is shown in Figure 4), wherein the splice tray 4 is in a closed configuration and it covers the base 2, and a second position (which is shown in Figure 2), wherein the splice tray 4 is in an open configuration for allowing easy access to the base 2. Preferably, the splice tray 4 has shape and size such that, when it is in its first position, it substantially covers the base 2, thus allowing optical fibers to pass above the splice tray 4 from beneath the splice tray 4, as it will be described in detail herein after. Preferably, the splice tray 4 is provided with a plurality of fiber guiding channels 41 and a central mandrel 42. Preferably, the fiber guiding channels 41 have straight portions and curved portions, with each curved portion having a bending radius preferably higher that or equal to 20 mm. Preferably, the central mandrel 42 has a diameter equal to or higher than 40 mm. Preferably, the splice tray 4 is made of a thermoplastic material. More preferably, the splice tray 4 is made from ABS (Acrylonitrile butadiene styrene) polymers.

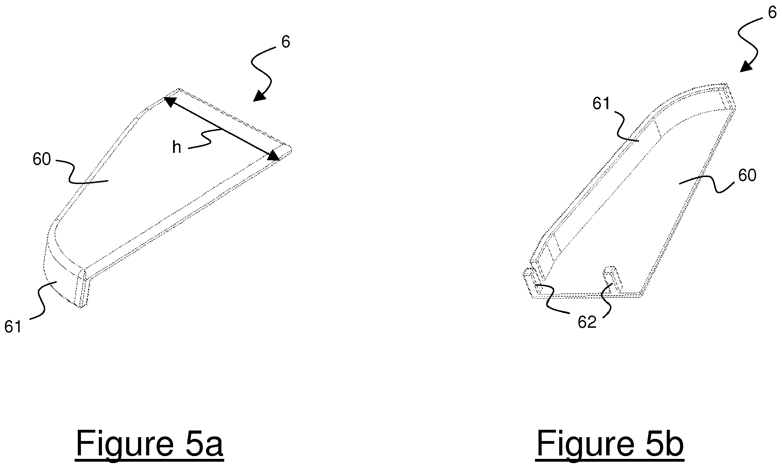

Figures 5a and 5b show two perspective views of a cable protection cover 6 according to an embodiment of the present invention. The cable protection cover 6 has a front protection surface 60 substantially shaped as a right-angled triangle having a height h. The cable protection cover 6 further comprises a side protection surface 61 connected to the front protection surface 60 along the hypotenuse of the right-angled triangle. According to one preferred embodiment, the height h is chosen so that, when the cable protection cover 6 is connected to the base 2 (and in particular to the sidewall 2a of the base 2, as shown in Figure 1), the cable protection cover 6 covers the first weakening line 201a and the corresponding first removable portion 20a of the sidewall 2a.

According to a further preferred embodiment, the height h is chosen so that, when the cable protection cover 6 is connected to the base 2 (and in particular to the sidewall 2a of the base 2), the cable protection cover 6 covers both the first weakening line 201a (and the corresponding first removable portion 20a of the sidewall 2a) and at least one second weakening line 211a (and the corresponding second removable portions 21a of the sidewall 2a). This further preferred embodiment is particularly advantageous in the case also the drop cable(s) reaches the optical transition box through the in-line cable duct and thus also the drop cable(s) results to be contained within the in-line cable duct. According to said further preferred embodiment, the overall dimensions of the cable protection cover are made to be greater than those of a cable protection cover which is requested to cover only the first removable portions mentioned above.

Preferably, the length of a cable protection cover is comprised from about 50 mm to 60 mm. More preferably, the length of the cable protection cover is comprised from about 30 mm to 40 mm.

Preferably, the thickness of a cable protection cover is comprised from about 5 mm to 30 mm. More preferably, the thickness of the cable protection cover is comprised from about 10 mm to 20 mm.

The cable protection cover 6 further comprises fixing protrusions 62, whose lateral surface is suitable for engaging with the hooking elements of the fixing device 26a projecting from the sidewall 2a in order to fix the cable protection cover 6 to the sidewall 2a of the base 2. The cable protection cover 5, which is suitable for being associated to the corresponding sidewall 2c, is symmetrical relative to the cable protection cover 6. Therefore, a detailed description for the cable protection cover 5 will not be repeated.

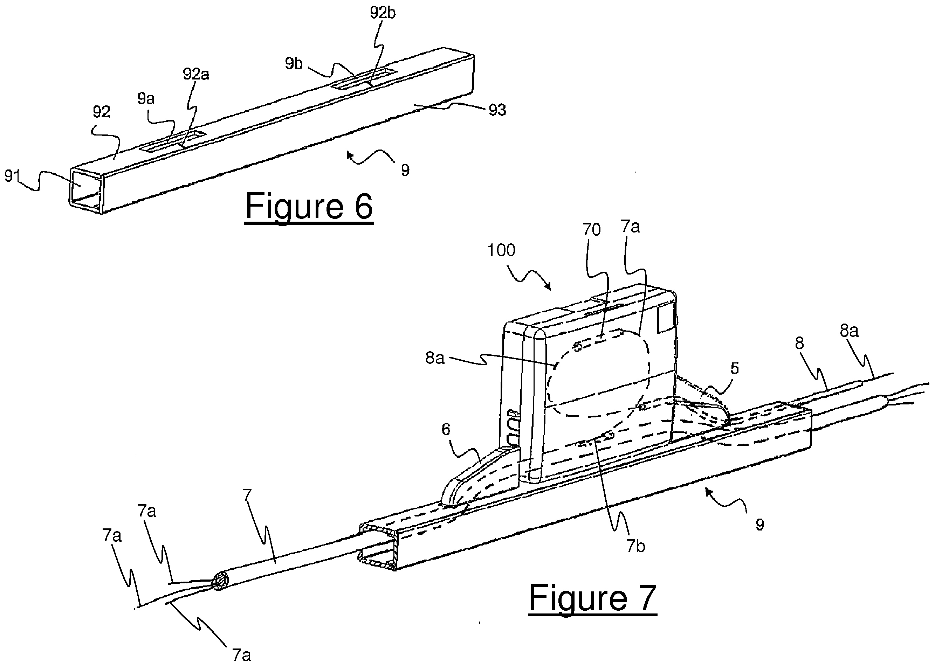

Herein after, by referring also to Figures 6 and 7, a possible installation of the optical transition box assembly 100 will be described in detail.

For seek of clarity, it is assumed that an optical transition box assembly 100 is installed for making an optical connection between an in-line cable and a single drop cable exiting from an optical termination box. The in-line cable duct protecting the in-line cable (which duct is indicated by the reference number 9 in Figures 6 and 7) is shown to have a square section. However, the in-line cable duct 9 can have a cross-section of any shape.

The in-line cable duct 9 is assumed to be fixed to a building wall (not shown in Figure 6) along its sidewalls 91. An in-line cable (shown with reference number 7 in Figures 3 and 7) is already installed within the in-line cable duct 9.

The in-line cable duct 9 of Figures 6 and 7 is shown to be horizontally arranged. This arrangement has been used only for improving clarity of the drawings. However, in the practice, the in-line cable duct is vertically arranged within the building.

As shown in Figure 6, the installation of the optical transition box assembly 100 requires that two windows 9a, 9b are made at a sidewall 92 of the in-line cable duct 9. The sidewall 92, on which the two windows 9a, 9b are made, is adjacent to the sidewall 91 that is coupled to the building wall. The windows 9a and 9b are large enough to allow the passage of an in-line cable portion which is extracted from the in-line cable duct 9 and introduced into the optical transition box 1. Conveniently, the windows 9a, 9b are small enough to minimize the loss of rigidity of the in-line cable duct 9. Preferably, the length of the windows 9a, 9b is comprised from about 20 mm to 50 mm. Preferably, the width of the windows 9a, 9b is comprised from about 5 mm to 20 mm.

The in-line cable duct 9 is provided with a duct cover 93 which is removed when the optical connection between the in-line cable 7 and the drop cable has to be made within the optical transition box 1, as better described in the following of the present description.

In the following, the relevant installation steps of the optical transition box assembly 100 are described with reference to the Figures 3 and 7.

First of all, the first removable portions 20a, 20c of the respective sidewalls 2a, 2c are removed (e.g. by pressing them with a finger tip or a tool) so that first openings are formed in the sidewalls 2a, 2c, respectively, for receiving the in-line cable 7 entering into and exiting from the optical transition box 1.

Then, at least one of the second removable portions 21a of the sidewall 2a is removed so that at least one second opening is formed in the sidewall 2a for receiving at least one drop cable 8.

This embodiment is merely exemplary.

In fact, in case a drop cable 8 is provided to reach the optical transition box 1 from an area opposite to the sidewall 2a, at least one of the second removable portions 21c provided at the sidewall 2c can be removed, thus forming at least one second opening which is suitable for receiving the drop cable 8 at the sidewall 2c.

Moreover, in case two or more drop cables 8 are provided, corresponding second removable portions 21a at the sidewall 2a and/or second removable portions 21c at the sidewall 2c can be removed for allowing the drop cables 8 to enter into the optical transition box 1.

According to the present invention, the base 2 of the optical transition box 1 is positioned next to the in-line cable duct 9. In detail, the base 2 is positioned between the two windows 9a, 9b and the bottom 2e of the base 2 is positioned to face the building wall, while a sidewall of the base 2 (e.g. the sidewall 2b in the Figures) is positioned to face the duct sidewall 92. Preferably, the base 2 is moved towards the in-line cable duct 9 until the spacers 27 come into contact with the duct sidewall 92. The spacers 27 have the function of advantageously avoiding a direct contact between the base 2 and the duct 9 which would prevent the cover 3 to be fitted onto and locked to the base 2 of the optical transition box 1.

According to a preferred embodiment of the present invention, cable protection covers 5, 6 are provided such that the cable protection cover 6 suitably covers the window 9a and the cable protection cover 5 suitably covers the window 9b, as it will be described in detail herein after.

The base 2 is typically fixed to the building wall, e.g. by means of screws or the like.

An end of the in-line cable 7 which is laid down into the in-line cable duct 9 is connected to a distribution cabinet which, as mentioned above, is generally present in the basement of the building. The in-line cable 7 runs from the distribution cabinet to the building last floor so that each floor - and thus any apartment/office at each floor - of the building can be connected to the in-line cable, typically by means of a drop cable 8 which connects the optical transition box to the in-line cable. Generally, a further drop cable (not shown in the Figures) connects the optical transition box to a termination box that is located in correspondence of each end user.

When an end user (located at a given floor of the building) is requested to be connected to the in-line cable 7, an optical transition box assembly 100 according to the present invention is installed according to the following installation procedure.

In proximity of the area in which the optical transition box 1 has to be installed, the cover 93 of the in-line cable duct 9 is removed for allowing easy access to the in-line cable 7.

A predetermined length of the in-line cable 7 is pulled out from the in-line cable duct 9 so that a portion of the in-line cable 7 can be introduced into the base 2 of the optical transition box 1. The predetermined length of the in-line cable that is extracted from the in-line cable duct 9 and introduced into the base 2 is shown in Figures 3 and 7. In particular, the in-line cable 7 enters the base 2 through a first opening of the sidewall 2a and exits the base 2 through a first opening of the sidewall 2c. Preferably, within the base 2, the in-line cable 7 is fixed thereto by means of the in-line cable fixing tabs 22a, 22c which prevent axial movements of the in-line cable 7.

A portion of the extracted in-line cable 7 which enters the base 2 through the sidewall 2a is placed within the window 9a by means of a small cut 92a that is present on the duct sidewall 92 in correspondence of the window 9a. In detail, once the installer has positioned a predetermined length of the in-line cable 7 within the base 2, the portion of the extracted in-line cable 7 which enters the base 2 through the sidewall 2a is passed through the cut 92a and then placed inside the window 9a.

Analogously, the portion of the extracted in-line cable 7 which exits the base 2 through the sidewall 2c is placed within the window 9b by means of a small cut 92b that is present on the duct sidewall 92 in correspondence of the window 9b. In detail, once the installer has positioned the predetermined length of the in-line cable 7 within the base 2, the portion of the extracted in-line cable 7 which exits the base 2 through the sidewall 2c is passed through the cut 92b and placed inside the window 9b.

Successively, the duct cover 93 is replaced and the in-line cable duct 9 is suitably closed.

A portion 7b of the outer sheath of the in-line cable 7 contained within the base 2 is peeled off and at least one in-line optical fiber 7a is extracted from the in-line cable 7 in order to be spliced with at least one optical fiber 8a of a drop cable 8 entering the optical transition box 1.

In detail, the drop cable 8 has a first end which is generally connected to a termination box (not shown in the Figures) and a second end which is inserted into the base 2, for instance through a second opening of the sidewall 2a. Preferably, the drop cable 8 is fixed to the base 2 by means of drop cable fixing tabs 23a which prevent any axial movement of the drop cable 8. The outer sheath of the drop cable within the base 2 is removed so that at least one drop optical fiber 8a is exposed.

The in-line optical fiber 7a and the drop optical fiber 8a are arranged within the bottom 2e according to respective paths selected among the paths defined by the guiding elements 24, 25, 251. In particular, the fibers 7a and 8a are arranged within the first fiber guiding protrusions 24 (see Figure 3) and then they are wound around the fiber winding protrusions 25. The second fiber winding protrusions 251 help keeping the wound fibers in the correct and safe position. The arrangements of the fibers 7a, 8a shown in Figure 3 are merely exemplary. Other arrangements could be envisaged.

Preferably, the above described operations are performed by keeping the splice tray 4 in its second position which allows the base 2 of the optical transition box 1 to be easily accessed. Then, the splice tray 4 is rotated about the hinges 29 from its second position to its first position so that the splice tray 4 at least partially covers the base 2. The free ends of the fibers 7a, 8a are brought to the splice tray 4 where they are spliced (the splicing being indicated with reference number 70 in Figure 7), e.g. by means of fusion splicing or by means of a mechanical joint. The spliced fibers 7a, 8a are then arranged in the fiber guiding channels 41 of the splice tray 4 and, if necessary, they are wound about the central mandrel 42.

Successively, the cover 3 is fitted onto the base 2 and pressed for snap-on locking it, so that the optical transition box 1 results in its closed position.

Finally, the cable protection covers 5, 6 are snap-on connected to the sidewalls 2c and 2a of the base 2, respectively, so that the cable protection cover 6 covers the portion of the in-line cable 7 exposed between the window 9a and the first opening of the sidewall 2a of the base 2, while the cable protection cover 5 covers the portion of the in-line cable 7 exposed between the window 9b and the first opening of the sidewall 2c. The optical transition box assembly 100 at the end of the installation is shown in Figure 7.

According to an embodiment of the present invention, the cable protection covers 5, 6 have dimensions which are suitable for covering the windows 9a, 9b of the in-line cable duct 9 and a first opening of the sidewalls 2a, 2c, respectively.

According to a further embodiment, the cable protection covers 5, 6 have dimensions which are suitable for covering the windows 9a, 9b of the in-line cable duct 9 as well as a first opening and at least one second opening of the sidewalls 2a, 2c respectively, said openings being suitable for receiving the in-line cable 7 and at least one drop cable 8. According to said further embodiment, the cable protection covers 5, 6 have dimensions which are greater than those of the cable protection covers 5, 6 with respect to the embodiment mentioned above. According to said further embodiment, the drop cable 8 - entering the optical transition box 1 of the present invention - is preferably laid down within the in-line cable duct 9 together with the in-line cable 7 and the cable protection covers 5, 6 advantageously cover the in-line cable 7 and the drop cable lengths which exit from and enter into the in-line cable duct 9.

According to an embodiment of the present invention, the optical transition box 1 can be coupled directly to an in-line optical cable which comprises at least one optical fiber. According to this embodiment, the in-line optical cable can be a blown fiber tube cable which, generally, does not require to be received into an installation duct. In fact, the tube possessed by the cable - and into which the optical fibers are suitably blown - performs the function of the in-line cable duct which can thus be suppressed.

The optical transition box assembly according to the embodiments of the present invention has a plurality of advantages.

As mentioned above, the optical transition box assembly according to the present invention can be used with any type of in-line cable ducts, independently of the shape and size of their cross section. Since the optical transition box of the assembly of the present invention is placed next to the in-line cable duct and the in-line cable is extracted therefrom and introduced into the optical transition box, no openings have to be provided on the sidewalls of the box base for housing the in-line cable duct and only openings suitable for housing in-line cables and drop cables have to be provided on corresponding sidewalls of the base of the optical transition box.

This configuration allows to associate the optical transition box assembly to any type of in-line cable duct and further contributes in reducing the optical transition box size (in particular the thickness thereof). Indeed, while the optical transition boxes are generally thicker than the in-line cable duct since the latter has to be contained within the optical transition box, the optical transition box of the assembly according to the present invention has a remarkably reduced thickness. Preferably, the optical transition box of the assembly according to the present invention is as thin as the in-line cable duct, thus advantageously resulting in an optical installation of reduced size and aesthetically effective.

Moreover, the optical transition box assembly according to the present invention can be advantageously associated to in-line cable ducts already fixed to a building wall. Indeed, thanks to the fact that the optical transition box assembly according to the present invention is placed adjacent to the in-line cable duct, the optical transition box assembly can be advantageously installed without removing the in-line cable duct.

## Claims

1. An optical transition box assembly (100) comprising an optical transition box (1), said optical transition box (1) comprising a base (2) and a cover (3), wherein said base (2) comprises two sidewalls (2a, 2c), each of said two sidewalls (2a, 2c) having a first opening allowing a portion of an in-line optical cable (7), extracted from an in-line cable duct (9) positioned next to said base (2) and arranged so that said in-line cable (7) exits and enters said duct (9) through at least one window (9a, 9b) provided in said duct (9), to enter said base (2) and to exit said base (2), the optical transition box assembly (100) further comprising a cable protection cover (5, 6) removably engageable with said base (2) and, when engaged with said base (2), suitable to cover a length of said portion of said in-line cable (7), said length being exposed between said at least one window (9a, 9b) of said duct (9) and said first opening of one of said two sidewalls (2a, 2c).

2. The optical transition box assembly (100) according to claim 1, wherein at least one of said two sidewalls (2a, 2c) has a first weakening line (201a, 201c) defining a first removable sidewall portion (20a, 20c), said first weakening line (201a, 201c) creating said first opening when said first removable portion (20a, 20c) is removed.

3. The optical transition box assembly (100) according to any of the preceding claims, wherein said one of said two sidewalls (2a, 2c) further has a second opening allowing a drop optical cable (8) to enter said base (2).

4. The optical transition box assembly (100) according to claim 3, wherein said cable protection cover (5, 6) is suitable to cover also said second opening.

5. The optical transition box assembly (100) according to claim 3 or 4, wherein said one of said two sidewalls (2a, 2c) has a second weakening line (211a, 211c) defining a second removable sidewall portion (21a, 21c), said second weakening line (211a, 211c) creating said second opening, when said second removable portion (21a, 21c) is removed.

6. The optical transition box assembly (100) according to any of the preceding claims, wherein said one of said two sidewalls (2a, 2c) is provided with a fixing device (26a, 26c) for fixing said cable protection cover (5, 6) to said base (2).

7. The optical transition box assembly (100) according to claim 6, wherein said cable protection cover (5, 6) has fixing protrusions (62) suitable for engaging with said fixing device (26a, 26c).

8. The optical transition box assembly (100) according to any of the preceding claims, wherein said cable protection cover (5, 6) has a front protection surface (60) substantially shaped as a right-angled triangle.

9. The optical transition box assembly (100) according to claim 8, wherein said cable protection cover (5, 6) further has a side protection surface (61) connected to said front protection surface (60) along an hypotenuse of said right-angled triangle.

10. A method for installing an optical transition box assembly (100) for making an optical connection between an in-line optical cable (7) and a drop optical cable (8) of a fiber-to-the-home network, the optical transition box assembly (100) comprising an optical transition box (1), said in-line optical cable (7) being laid down in a duct (9), wherein said method comprises:
a) providing the duct (9) with at least one window (9a, 9b);
b) extracting a portion of said in-line cable (7) from said duct (9) and arranging said portion so that the in-line cable (7) exits and enters said duct (9) through said at least one window (9a, 9b);
c) positioning said optical transition box (1) next to said duct (9);
d) introducing said portion of said in-line cable (7) in said optical transition box (1);
e) introducing an end of said drop optical cable (8) in said optical transition box; and
f) making an optical connection between at least one optical fiber of said in-line optical cable (7) and at least one optical fiber of said drop optical cable (8) within said optical transition box (1),
said method further comprising the step of covering by means of a cable protection cover (5, 6) a length of said portion of said in-line cable (7), said length being exposed between said at least one window (9a, 9b) and said optical transition box (1).

11. The method according to claim 10, wherein the duct (9) is provided with two windows (9a, 9b).

12. The method according to claim 11, wherein the optical transition box (1) is positioned between said two windows (9a, 9b).

13. The method according to claim 10, wherein the step of covering further comprises the step of covering a portion of said drop optical cable (8), said portion being exposed between said at least one window (9a, 9b) and said optical transition box (1).

14. The method according to claims 10, wherein the step of covering is carried out after the step f) of making an optical connection.

## Patentansprüche

1. Optische Einführungskasten-Baugruppe (100), die einen optischen Einführungskasten (1) umfasst, wobei der optische Einführungskasten (1) einen Sockel (2) sowie einen Deckel (3) umfasst, und der Sockel (2) zwei Seitenwände (2a, 2c) umfasst und jede der Seitenwände (2a, 2c) eine erste Öffnung aufweist, die es einem Abschnitt eines eingehenden optischen Kabels (7), das aus einem Kanal (9) für das eingehende Kabel herausgeführt wird, der an dem Sockelelement (2) positioniert und so eingerichtet ist, dass das eingehende Kabel (7) über wenigstens einen Ausschnitt (9a, 9b) austritt, der in dem Kanal (9) vorhanden ist, und in den Kanal (9) eintritt, ermöglicht, in den Sockel (2) einzutreten und aus dem Sockel (2) auszutreten, wobei die optische Einführungskasten-Baugruppe (100) des Weiteren eine Kabel-Schutzabdeckung (5, 6) umfasst, die lösbar mit dem Sockel (2) in Eingriff gebracht werden kann und sich, wenn sie mit dem Sockel (2) in Eingriff ist, dazu eignet, eine Länge des Abschnitts des eingehenden Kabels (7) abzudecken, wobei die Länge zwischen dem wenigstens einen Ausschnitt (9a, 9b) des Kanals (9) und der ersten Öffnung einer der zwei Seitenwände (2a, 2c) freiliegt.

2. Optische Einführungskasten-Baugruppe (100) nach Anspruch 1, wobei wenigstens eine der zwei Seitenwände (2a, 2c) eine erste Schwächungslinie (201a, 201c) aufweist, die einen ersten entfernbaren Seitenwandabschnitt (20a, 20c) bildet, und die erste Schwächungslinie (201a, 201c) die erste Öffnung erzeugt, wenn der erste entfernbare Abschnitt (20a, 20c) entfernt wird.

3. Optische Einführungskasten-Baugruppe (100) nach einem der vorangehenden Ansprüche, wobei die eine der zwei Seitenwände (2a, 2c) des Weiteren eine zweite Öffnung aufweist, die zulässt, dass ein optisches Anschlusskabel (8) in den Sockel (2) eintritt.

4. Optische Einführungskasten-Baugruppe (100) nach Anspruch 3, wobei sich die Kabel-Schutzabdeckung (5, 6) dazu eignet, auch die zweite Öffnung abzudecken.

5. Optische Einführungskasten-Baugruppe (100) nach Anspruch 3 oder 4, wobei die eine der zwei Seitenwände (2a, 2c) eine zweite Schwächungslinie (211a, 211c) aufweist, die einen zweiten entfernbaren Seitenwandabschnitt (21a, 21c) bildet, und die zweite Schwächungslinie (211a, 211c) die zweite Öffnung erzeugt, wenn der zweite entfernbare Abschnitt (21a, 21c) entfernt wird.

6. Optische Einführungskasten-Baugruppe (100) nach einem der vorangehenden Ansprüche, wobei die eine der zwei Seitenwände (2a, 2c) mit einer Befestigungseinrichtung (26a, 26c) zum Befestigen der Kabel-Schutzabdeckung (5, 6) an dem Sockel (2) versehen ist.

7. Optische Einführungskasten-Baugruppe (100) nach Anspruch 6, wobei die Kabel-Schutzabdeckung (5, 6) Befestigungs-Vorsprünge (62) aufweist, die sich zum Eingriff mit der Befestigungseinrichtung, (26a, 26c) eignen.

8. Optische Einführungskasten-Baugruppe (100) nach einem der vorangehenden Ansprüche, wobei die Kabel-Schutzabdeckung (5, 6) eine vordere Schutzfläche (60) hat, die im Wesentlichen als ein rechtwinkliges Dreieck geformt ist.

9. Optische Einführungskasten-Baugruppe (100) nach Anspruch 8, wobei die Kabel-Schutzabdeckung (5, 6) des Weiteren eine seitliche Schutzfläche (61) hat, die entlang einer Hypotenuse des rechtwinkligen Dreiecks mit der vorderen Schutzfläche (60) verbunden ist.

10. Verfahren zum Installieren einer optischen Einführungskasten-Baugruppe (100) zum Herstellen einer optischen Verbindung zwischen einem eingehenden optischen Kabel (7) und einem optischen Anschlusskabel (8) eines Fiber-To-The-Home-Netzwerks, wobei die optische Einführungskasten-Baugruppe (100) einen optischen Einführungskasten (1) umfasst und das eingehende optische Kabel (7) in einem Kanal (9) verlegt ist, und das Verfahren umfasst, dass:
a) der Kanal (9) mit wenigstens einem Ausschnitt (9a, 9b) versehen wird;
b) ein Abschnitt des eingehenden Kabels (9) aus dem Kanal (9) herausgeführt wird und der Abschnitt so angeordnet wird, dass das eingehende Kabel (7) über den wenigstens einen Ausschnitt (9a, 9b) austritt und in den Kanal (9) eintritt;
c) der optische Einführungskasten (1) an dem Kanal (9) positioniert wird;
d) der Abschnitt des eingehenden Kabels (7) in den optischen Einführungskasten (1) eingeleitet wird;
e) ein Ende des optischen Anschlusskabels (8) in den optischen Einführungskasten eingeleitet wird; und
f) eine optische Verbindung zwischen wenigstens einer optischen Faser des eingehenden optischen Kabels (7) und wenigstens einer optischen Faser des Anschlusskabels (8) im Inneren des optischen Einführungskastens (1) hergestellt wird,
das Verfahren des Weiteren den Schritt umfasst, in dem mittels einer Kabel-Schutzabdeckung (5, 6) eine Länge des Abschnitts des eingehenden Kabels (7) abgedeckt wird, wobei die Länge zwischen dem wenigstens einen Ausschnitt (9a, 9b) und dem optischen Einführungskasten (1) freiliegt.

11. Verfahren nach Anspruch 10, wobei der Kanal (9) mit zwei Ausschnitten (9a, 9b) versehen ist.

12. Verfahren nach Anspruch 11, wobei der optische Einführungskasten (1) zwischen den zwei Ausschnitten (9a, 9b) positioniert ist.

13. Verfahren nach Anspruch 10, wobei der Schritt des Abdeckens des Weiteren den Schritt umfasst, in dem ein Abschnitt des optischen Anschlusskabels (8) abgedeckt wird, und der Abschnitt zwischen dem wenigstens einen Ausschnitt (9a, 9b) und dem optischen Einführungskasten (1) freiliegt.

14. Verfahren nach Anspruch 10, wobei der Schritt des Abdeckens nach dem Schritt f) ausgeführt wird, in dem eine optische Verbindung hergestellt wird.

## Revendications

1. Ensemble de boîte de transition optique (100) comprenant une boîte de transition optique (1), ladite boîte de transition optique (1) comprenant une base (2) et un couvercle (3), dans lequel ladite base (2) comprend deux parois latérales (2a, 2c), chacune desdites deux parois latérales (2a, 2c) présentant une première ouverture permettant à une partie d'un câble optique en ligne (7), extrait d'un conduit de câble en ligne (9) positionné près de ladite base (2) et agencé de sorte que ledit câble en ligne (7) sorte et entre dans ledit conduit (9) par au moins une fenêtre (9a, 9b) prévue dans ledit conduit (9), d'entrer dans ladite base (2) et de sortir de ladite base (2), l'ensemble de boîte de transition optique (100) comprenant en outre un couvercle de protection de câble (5, 6) pouvant être en prise de manière amovible avec ladite base (2) et, lors de la mise en prise avec ladite base (2), adapté pour couvrir une longueur de ladite partie dudit câble en ligne (7), ladite longueur étant exposée entre ladite au moins une fenêtre (9a, 9b) dudit conduit (9) et ladite première ouverture d'une desdites deux parois latérales (2a, 2c).

2. Ensemble de boîte de transition optique (100) selon la revendication 1, dans lequel au moins une desdites deux parois latérales (2a, 2c) présente une première ligne d'affaiblissement (201a, 201c) définissant une première partie de paroi latérale amovible (20a, 20c), ladite première ligne d'affaiblissement (201a, 201c) créant ladite première ouverture lorsque ladite première partie amovible (20a, 20c) est retirée.

3. Ensemble de boîte de transition optique (100) selon l'une quelconque des revendications précédentes, dans lequel ladite une desdites deux parois latérales (2a, 2c) présente en outre une seconde ouverture permettant à un câble optique d'extraction (8) d'entrer dans ladite base (2).

4. Ensemble de boîte de transition optique (100) selon la revendication 3, dans lequel ledit couvercle de protection de câble (5, 6) est adapté pour couvrir également ladite seconde ouverture.

5. Ensemble de boîte de transition optique (100) selon la revendication 3 ou 4, dans lequel ladite une desdites deux parois latérales (2a, 2c) présente une seconde ligne d'affaiblissement (211a, 211c) définissant une seconde partie de paroi latérale amovible (21a, 21c), ladite seconde ligne d'affaiblissement (211a, 211c) créant ladite seconde ouverture, lorsque ladite seconde partie amovible (21a, 21c) est retirée.

6. Ensemble de boîte de transition optique (100) selon l'une quelconque des revendications précédentes, dans lequel ladite une desdites deux parois latérales (2a, 2c) comprend un dispositif de fixation (26a, 26c) pour la fixation dudit couvercle de protection de câble (5, 6) à ladite base (2).

7. Ensemble de boîte de transition optique (100) selon la revendication 6, dans lequel ledit couvercle de protection de câble (5, 6) présente des saillies de fixation (62) adaptées pour se mettre en prise avec ledit dispositif de fixation (26a, 26c).

8. Ensemble de boîte de transition optique (100) selon l'une quelconque des revendications précédentes, dans lequel ledit couvercle de protection de câble (5, 6) présente une surface de protection avant (60) formée sensiblement comme un triangle rectangle.

9. Ensemble de boîte de transition optique (100) selon la revendication 8, dans lequel ledit couvercle de protection de câble (5, 6) présente en outre une surface de protection latérale (61) reliée à ladite surface de protection avant (60) le long de l'hypoténuse dudit triangle rectangle.

10. Procédé d'installation d'un ensemble de boîte de transition optique (100) pour fabriquer une connexion optique entre un câble optique en ligne (7) et un câble optique d'extraction (8) d'un réseau de fibre jusqu'au domicile, l'ensemble de boîte de transition optique (100) comprenant une boîte de transition optique (1), ledit câble optique en ligne (7) étant posé dans un conduit (9), dans lequel ledit procédé comprend :
a) la fourniture du conduit (9) avec au moins une fenêtre (9a, 9b) ;
b) l'extraction d'une partie dudit câble en ligne (7) dudit conduit (9) et l'agencement de ladite partie de sorte que le câble en ligne (7) sorte et entre dans ledit conduit (9) par ladite au moins une fenêtre (9a, 9b) ;
c) le positionnement de ladite boîte de transition optique (1) près dudit conduit (9) ;
d) l'introduction de ladite partie dudit câble en ligne (7) dans ladite boîte de transition optique (1) ;
e) l'introduction d'une extrémité dudit câble optique d'extraction (8) dans ladite boîte de transition optique ; et
f) l'établissement d'une connexion optique entre au moins une fibre optique dudit câble optique en ligne (7) et au moins une fibre optique dudit câble optique d'extraction (8) dans ladite boîte de transition optique (1),
ledit procédé comprenant en outre l'étape de recouvrement, par le biais d'un couvercle de protection de câble (5, 6) d'une longueur de ladite partie dudit câble en ligne (7), ladite longueur étant exposée entre ladite une fenêtre (9a, 9b) et ladite boîte de transition optique (1).

11. Procédé selon la revendication 10, dans lequel le conduit (9) est doté de deux fenêtres (9a, 9b).

12. Procédé selon la revendication 11, dans lequel la boîte de transition optique (1) est positionnée entre lesdites deux fenêtres (9a, 9b).

13. Procédé selon la revendication 10, dans lequel l'étape de recouvrement comprend en outre l'étape de recouvrement d'une partie dudit câble optique d'extraction (8), ladite partie étant exposée entre ladite au moins une fenêtre (9a, 9b) et ladite boîte de transition optique (1).

14. Procédé selon la revendication 10, dans lequel l'étape de recouvrement est réalisée après l'étape f) d'établissement d'une connexion optique.
